# EUROPEAN PATENT APPLICATION

(11) **EP 4 446 391 A1**
(43) Date of publication of application: **16.10.2024**
(21) Application number: 22904147.0
(22) Date of filing: 01.12.2022
(51) Int. Cl.: C09J 133/04, C09J 163/00, C09J 175/04, C09J 201/00, C09J 7/38, H01G 9/048

(54) **ADHESIVE AGENT COMPOSITION, ADHESIVE TAPE, AND CAPACITOR ELEMENT**

(30) Priority: 06.12.2021 JP 2021198106; 06.12.2021 JP 2021198107; 06.12.2021 JP 2021198108
(71) Applicant: Nichiban Co.,Ltd., Tokyo 112-8663 (JP)
(72) Inventor: SAIKI, Fumiya, Tokyo 112-8663 (JP); SUZUKI, Yoshihiro, Tokyo 112-8663 (JP)
(74) Representative: Betten & Resch
(86) International application number: PCT/JP2022/044484
(87) International publication number: WO 2023/106216

(57) **Abstract**

Provided are an adhesive agent composition having excellent properties; an adhesive tape; and a capacitor element. An aspect of the present invention is an adhesive agent composition containing a cross-linked polymer obtained through a reaction between a base polymer and cross-linking agents, wherein the base polymer is a copolymer obtained through copolymerization of constituent monomers including low-Tg (meth)acrylic acid alkyl ester monomers having a Tg of 20°C or less, and a carboxyl group-containing monomer; in the constituent monomers, a content of a low-Tg (meth)acrylic acid alkyl ester monomer that includes an alkyl moiety having 5 or more carbon atoms is 30 mass% or more with respect to a total amount of the constituent monomers; in the constituent monomers, a content of a low-Tg (meth)acrylic acid alkyl ester monomer that includes an alkyl moiety having less than 5 carbon atoms is 10 mass% or less with respect to the total amount of the constituent monomers; the cross-linking agents include an epoxy-based cross-linking agent and an isocyanate-based cross-linking agent; and an amount M_{E} of the epoxy-based cross-linking agent is less than 0.10 parts by mass.

## Description

### Technical Field

The present invention relates to an adhesive agent composition, an adhesive tape, and a capacitor element. The present invention relates to an adhesive agent composition and an adhesive tape that are suitable for fixing, for example, an electronic component.

### Background Art

A capacitor element is produced by winding an anode foil and a cathode foil with a separator interposed therebetween, and inserting the wound body into a cylindrical housing. The wound anode, cathode, and separator (capacitor element) are fixed (have the winding thereof held) with an adhesive tape in some cases.

An adhesive tape used for holding winding of a capacitor element is required [1] to exhibit a sufficient winding-holding property even after solder reflow (heat resistance), [2] to exhibit a sufficient winding-holding property even when being in contact with an electrolytic solution filling a capacitor (electrolytic solution resistance), and the like. By satisfying these properties, a slack of the adhesive tape caused by, for example, the heat during reflow or the contact with an electrolytic solution is prevented, and the properties of the capacitor is sufficiently exhibited.

Patent Literature 1 discloses an adhesive tape suitable for holding winding of a capacitor element. Specifically, Patent Literature 1 discloses an adhesive tape including a base material and an adhesive agent layer disposed on at least one surface of the base material, the adhesive agent layer containing a base polymer, and the base polymer having an acid value of 45 mgKOH/g to 150 mgKOH/g. Patent Literature 1 indicates that such an adhesive tape has excellent heat resistance, and can well hold winding of a capacitor element even in high temperatures.

### Citation List

### Patent Literature

Patent Literature 1: JP 2016-125026 A

### Summary of Invention

### Technical Problem

The adhesive tape described in Patent Literature 1, however, has not had sufficient properties, such as heat resistance and electrolytic solution resistance, in some cases.

An object of the present invention is thus to provide an adhesive agent composition having excellent properties.

### Solution to Problem

The present inventor has found in earnest study that by using an adhesive agent composition containing specific components, the object can be achieved, and has thus completed the present invention.

An aspect (1) of the present invention is
an adhesive agent composition containing a cross-linked polymer obtained through a reaction between a base polymer and cross-linking agents, wherein
the base polymer is a copolymer obtained through copolymerization of constituent monomers including low-Tg (meth)acrylic acid alkyl ester monomers having a Tg of 20°C or less, and a carboxyl group-containing monomer,
in the constituent monomers, a content of a low-Tg (meth)acrylic acid alkyl ester monomer that includes an alkyl moiety having 5 or more carbon atoms is 30 mass% or more with respect to a total amount of the constituent monomers,
in the constituent monomers, a content of a low-Tg (meth)acrylic acid alkyl ester monomer that includes an alkyl moiety having less than 5 carbon atoms is 10 mass% or less with respect to the total amount of the constituent monomers,
the cross-linking agents include an epoxy-based cross-linking agent and an isocyanate-based cross-linking agent, and
an amount M_{E} of the epoxy-based cross-linking agent is less than 0.10 parts by mass, with an amount of the base polymer set to 100 parts by mass.

An aspect (2) of the present invention is
an adhesive tape including a base material and an adhesive agent layer disposed on at least one surface of the base material (the adhesive tape, however, excludes an adhesive tape including an adhesive agent layer stacked only 0.5 mm or more inside from edges on both sides of a base material, and an adhesive tape containing a tackifier resin in an amount of more than 10 parts by mass relative to 100 parts by mass of an acrylic polymer), wherein
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent,
an amount M_{E} of the epoxy-based cross-linking agent is more than 0.01 parts by mass and less than 0.10 parts by mass, with an amount of the base polymer set to 100 parts by mass,
an amount Mi of the isocyanate-based cross-linking agent is 0.10 parts by mass or more, with the amount of the base polymer set to 100 parts by mass,
a ratio of M_{I} to M_{E} is more than 1 (M_{I}/M_{E} > 1),
the base polymer is a copolymer obtained through copolymerization of constituent monomers including low-Tg (meth)acrylic acid alkyl ester monomers having a Tg of 20°C or less, and a carboxyl group-containing monomer,
in the constituent monomers, a content of a low-Tg (meth)acrylic acid alkyl ester monomer that includes an alkyl moiety having 5 or more carbon atoms is 30 mass% or more with respect to a total amount of the constituent monomers,
in the constituent monomers, a content of a low-Tg (meth)acrylic acid alkyl ester monomer that includes an alkyl moiety having less than 5 carbon atoms is 10 mass% or less with respect to the total amount of the constituent monomers, and
the adhesive tape is used for fixing an electronic component or electronic-component constituent material to be subjected to a heat treatment at 80°C or more.

An aspect (3) of the present invention is
an adhesive tape including a base material and an adhesive agent layer disposed on at least one surface of the base material (the adhesive tape, however, excludes an adhesive tape including an adhesive agent layer stacked only 0.5 mm or more inside from edges on both sides of a base material, and an adhesive tape containing a tackifier resin in an amount of more than 10 parts by mass relative to 100 parts by mass of an acrylic polymer), wherein
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent,
an amount M_{E} of the epoxy-based cross-linking agent is more than 0.01 parts by mass and less than 0.10 parts by mass, with an amount of the base polymer set to 100 parts by mass,
an amount Mi of the isocyanate-based cross-linking agent is 0.10 parts by mass or more, with the amount of the base polymer set to 100 parts by mass,
a ratio of M_{I} to M_{E} is more than 1 (M_{I}/M_{E} > 1),
the base polymer is a copolymer obtained through copolymerization of constituent monomers including low-Tg (meth)acrylic acid alkyl ester monomers having a Tg of 20°C or less, and a carboxyl group-containing monomer,
in the constituent monomers, a content of a low-Tg (meth)acrylic acid alkyl ester monomer that includes an alkyl moiety having 5 or more carbon atoms is 30 mass% or more with respect to a total amount of the constituent monomers,
in the constituent monomers, a content of a low-Tg (meth)acrylic acid alkyl ester monomer that includes an alkyl moiety having less than 5 carbon atoms is 10 mass% or less with respect to the total amount of the constituent monomers, and
the adhesive tape is used for holding winding of a capacitor element.

The cross-linked polymer preferably has a gel fraction of 60 to 90%.

The base polymer preferably has a weight average molecular weight of 500,000 or more and 1,500,000 or less.

An aspect (4) of the present invention is
a capacitor element including: a wound body formed by winding a plurality of thin-film electrodes; an adhesive tape that holds winding of the wound body; and an electrolytic solution, wherein
the adhesive tape includes a base material and an adhesive agent layer disposed on at least one surface of the base material,
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent, and
the capacitor element is used for attachment to a substrate by a reflow process.

An aspect (5) of the present invention is
a capacitor element including: a wound body formed by winding a plurality of thin-film electrodes; an adhesive tape that holds winding of the wound body; and an electrolytic solution, wherein
the adhesive tape includes a base material and an adhesive agent layer disposed on at least one surface of the base material,
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent, and
the base material is polyphenylene sulfide.

An aspect (6) of the present invention is
a capacitor element including: a wound body formed by winding a plurality of thin-film electrodes; an adhesive tape that holds winding of the wound body; and an electrolytic solution, wherein
the adhesive tape includes a base material and an adhesive agent layer disposed on at least one surface of the base material,
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent, and
the base polymer has a weight average molecular weight of 500,000 or more and 1,500,000 or less.

It is preferred that the base polymer be a copolymer obtained through copolymerization of constituent monomers including low-Tg (meth)acrylic acid alkyl ester monomers having a Tg of 20°C or less, and a carboxyl group-containing monomer,
in the constituent monomers, a content of a low-Tg (meth)acrylic acid alkyl ester monomer that includes an alkyl moiety having 5 or more carbon atoms be 30 mass% or more with respect to a total amount of the constituent monomers, and
in the constituent monomers, a content of a low-Tg (meth)acrylic acid alkyl ester monomer that includes an alkyl moiety having less than 5 carbon atoms be 10 mass% or less with respect to the total amount of the constituent monomers.

The cross-linked polymer preferably has a gel fraction of 85% or more.

The capacitor element is preferably an aluminum electrolytic capacitor.

An aspect (7) of the present invention is
a method for heat-treating a capacitor element, the method including:
heat-treating a capacitor element including an electrolytic solution, a wound body formed by winding a plurality of thin-film electrodes, and an adhesive tape that holds winding of the wound body, after the capacitor element is attached to a substrate, wherein
the adhesive tape includes a base material and an adhesive agent layer disposed on at least one surface of the base material,
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent, and
when a gel fraction of the cross-linked polymer in the capacitor element before the heat treatment is defined as Gf₃, and a gel fraction of the cross-linked polymer after the heat treatment is defined as Gf₄,
the Gf₃ is 50 mass% or more,
the Gf₄ is 70 mass% or more, and
a ratio [Gf₄/Gf₃] is 1.05 or more.

The heating temperature in the heat treatment is preferably 120°C or more.

The heat treatment is preferably a reflow process.

### Advantageous Effects of Invention

The present invention can provide an adhesive agent composition having excellent properties. An adhesive tape obtained using this adhesive agent composition can appropriately fix, for example, an electronic component including a capacitor element.

### Description of Embodiments

Hereinafter, an adhesive agent composition, an adhesive tape containing an adhesive agent composition, and a capacitor element having an adhesive tape applied thereto are described in detail, but the present invention is not limited by any of the following description.

The present invention may be a raw material composition for producing an adhesive agent composition. The raw material composition may contain all the raw materials or a part of the raw materials of the adhesive agent composition. In this case, a raw material contained in the raw material composition can appropriately be selected, and the blending amount, the use, the production method, and the like of the raw material composition conforms to the description about the adhesive agent composition.

In the present description, when a plurality of upper limit values and a plurality of lower limit values are separately described, all the numerical ranges that can be set by freely combining these upper limit values and lower limit values should be interpreted as described in the present description.

When a compound disclosed in the present description has an isomer(s), all the isomer(s) are usable in the present invention unless otherwise specified.

In the present description, the content, the blending amount, and the like described refer to the amount of a component (solid content) having a volatile component removed therefrom, unless otherwise specified. In the present description, the "amount", the "content", the "blending amount", and the like can appropriately be replaceable with each other without causing inconsistencies.

In the present description, the Tg (glass transition temperature) of each monomer refers to the Tg of a homopolymer formed from the monomer. The Tg is a conventionally known physical property, and can be measured, for example, by subjecting each homopolymer to differential scanning calorimetry (DSC).

The components classified in the present description can be used alone or in combination of two or more thereof, unless otherwise specified.

The electronic component is not particularly limited as long as it is a component used in an electric product. Specific examples of the electronic component include a capacitor element, a coil, a transformer, a battery, and a lead wire. The electronic-component constituent material is a material constituting these electronic components.

### ««<Adhesive agent composition»>»

### <<<Components>>>

An adhesive agent composition contains a cross-linked polymer. The adhesive agent composition may contain another component.

### «<Cross-linked polymer»>

The cross-linked polymer is obtained by cross-linking a base polymer, in other words, obtained through a reaction between a base polymer and cross-linking agents.

### «Cross-linking agents»

The cross-linking agents preferably include an epoxy-based cross-linking agent and an isocyanate-based cross-linking agent. The combination use of the epoxy-based cross-linking agent and the isocyanate-based cross-linking agent enables a control such that a cross-linking reaction is generated in temperature ranges at multiple stages. More specifically, it is considered that when the adhesive agent composition is formed into a tape for uses of holding an electronic component, including a use of holding winding of a capacitor element, particularly the combination of the epoxy-based cross-linking agent and the isocyanate-based cross-linking agent facilitates an appropriate control of a cross-linked state of the adhesive tape before and after a heat treatment (reflow process or the like), resulting in facilitating an appropriate control of the properties of the adhesive tape required at each temperature stage. The adhesive agent composition may contain an unreacted cross-linking agent.

### <Epoxy-based cross-linking agent>

As the epoxy-based cross-linking agent is usable a compound having 2 or more (preferably 2 to 5, more preferably 2 to 4) epoxy groups in one molecule.

Specific examples of the epoxy-based cross-linking agent include glycerin polyglycidyl ether, sorbitol polyglycidyl ether, pentaerythritol polyglycidyl ether, diglycidyl aniline, N,N,N',N'-tetraglycidyl-m-xylenediamine, and 1,3-bis(N,N-diglycidylaminomethyl)cyclohexane.

The epoxy-based cross-linking agent may be a commercially available product such as "TETRAD X" manufactured by MITSUBISHI GAS CHEMICAL COMPANY, INC.

With the amount of the base polymer set to 100 parts by mass, the amount M_{E} of the epoxy-based cross-linking agent is preferably more than 0.001 parts by mass, more than 0.01 parts by mass, 0.02 parts by mass or more, or 0.05 parts by mass or more. On the other hand, the amount M_{E} of the epoxy-based cross-linking agent is preferably less than 1.0 parts by mass, less than 0.10 parts by mass, or less than 0.08 parts by mass.

By setting the amount M_{E} of the epoxy-based cross-linking agent to this range, the heat resistance and the electrolytic solution resistance of the adhesive agent composition can be increased.

By using the isocyanate-based cross-linking agent and setting the amount M_{E} of the epoxy-based cross-linking agent to less than 0.10 parts by mass, the heat resistance and the electrolytic solution resistance of the adhesive tape can particularly be increased.

By using the isocyanate-based cross-linking agent and setting the amount M_{E} of the epoxy-based cross-linking agent to more than 0.01 parts by mass, the heat shrinkage resistance of the adhesive tape can particularly be increased while the heat resistance and the electrolytic solution resistance are increased in good balance.

### <Isocyanate-based cross-linking agent>

As the isocyanate-based cross-linking agent is usable a compound having 2 or more (preferably 2 to 5, more preferably 2 to 4) isocyanate groups in one molecule.

Specific examples of the isocyanate-based cross-linking agent include:
aromatic cross-linking agents such as toluene diisocyanate (TDI), phenylene diisocyanate, diphenylmethane diisocyanate (MDI), xylylene diisocyanate (XDI), and tetramethylxylene diisocyanate (TMXDI), and hydrogenated products thereof;
alicyclic cross-linking agents such as cyclohexane diisocyanate, isophorone diisocyanate, dicyclohexylmethane diisocyanate, and methylcyclohexane diisocyanate; and
alkylene-based cross-linking agents such as hexamethylene diisocyanate, isopropylene diisocyanate, methylene diisocyanate, and lysine diisocyanate.

The isocyanate-based cross-linking agent may be a commercially available product such as "Coronate L" manufactured by Tosoh Corporation and "Takenate D-101E" manufactured by Mitsui Chemicals, Inc.

With the amount of the base polymer set to 100 parts by mass, the amount Mi of the isocyanate-based cross-linking agent is preferably 0.01 parts by mass or more, 0.05 parts by mass or more, 0.10 parts by mass or more, 0.5 parts by mass or more, or 1.0 parts by mass or more. On the other hand, the amount Mi of the isocyanate-based cross-linking agent is preferably 25 parts by mass or less, 15 parts by mass or less, 10 parts by mass or less, 5 parts by mass or less, or 3 parts by mass or less.

Setting the amount Mi of the isocyanate-based cross-linking agent to this range facilitates an appropriate control of a cross-linked state of the adhesive tape before and after a heat treatment (reflow process or the like) and can increase the heat resistance and the electrolytic solution resistance of the adhesive agent composition.

By setting the amount Mi of the isocyanate-based cross-linking agent to 0.10 parts by mass or more, the heat shrinkage resistance of the adhesive tape can particularly be increased.

The ratio M_{I}/M_{E} is preferably more than 1, 2 or more, 5 or more, 10 or more, 20 or more, or 25 or more. On the other hand, the ratio M_{I}/M_{E} is preferably 500 or less, 200 or less, 100 or less, 75 or less, or 50 or less.

By setting the ratio M_{I}/M_{E} to this range, the heat resistance and the electrolytic solution resistance of the adhesive agent composition can be increased.

### <Other cross-linking agents>

The cross-linking agents may include a cross-linking agent (for example, a known cross-linking agent such as a polyvalent metal-based cross-linking agent, a polyol-based cross-linking agent, and a polyamine-based cross-linking agent) other than the epoxy-based cross-linking agent and the isocyanate-based cross-linking agent without impairing the effects of the present invention.

With the amount of the base polymer set to 100 parts by mass, the amount of the other cross-linking agent is preferably 10 parts by mass or less, 5 parts by mass or less, 2 parts by mass or less, 1 part by mass or less, or 0.1 parts by mass or less.

### «Base polymer»

As the base polymer is usable a polymer containing a cross-linkable functional group (for example, a functional group containing an unsaturated carbon bond, such as an acryloyl group).

Hereinafter, a preferable base polymer is described.

The base polymer is preferably a copolymer obtained through copolymerization of a plurality of copolymerizable monomers (called constituent monomers).

### <Constituent monomers>

The constituent monomers preferably include low-Tg (meth)acrylic acid alkyl ester monomers. The constituent monomers preferably also include a carboxyl group-containing monomer. By using these monomers as the constituent monomers, the heat resistance and the electrolytic solution resistance of the adhesive agent composition can be increased in good balance.

The constituent monomers may include another monomer.

### (Low-Tg (meth)acrylic acid alkyl ester monomers)

Homopolymers formed from the low-Tg (meth)acrylic acid alkyl esters have a Tg of less than 20°C, preferably less than 0°C, less than -20°C, or less than -50°C.

The lower limit value of the Tg is not particularly limited, but, for example, -90°C or - 80°C.

Examples of the low-Tg (meth)acrylic acid alkyl ester monomers include 2-ethylhexyl acrylate (2EHA, Tg: -70°C, number of carbon atoms in alkyl moiety: 8), isononyl acrylate (INA, Tg: -58°C, number of carbon atoms in alkyl moiety: 9), butyl acrylate (BA, Tg: -55°C, number of carbon atoms in alkyl moiety: 4), lauryl acrylate (LA, Tg: -23°C, number of carbon atoms in alkyl moiety: 12), lauryl methacrylate (LMA, Tg: -65°C, number of carbon atoms in alkyl moiety: 12), and isostearyl acrylate (ISA, Tg: -18°C, number of carbon atoms in alkyl moiety: 18).

The constituent monomers preferably include a low-Tg (meth)acrylic acid alkyl ester monomer that includes an alkyl moiety having 5 or more, 6 or more, or 8 or more carbon atoms. The upper limit of the number of carbon atoms is not particularly limited, but may be, for example, 30, 25, or 20.

In the constituent monomers, the content of the low-Tg (meth)acrylic acid alkyl ester monomer that includes an alkyl moiety having 5 or more carbon atoms is preferably 30 mass% or more, 45 mass% or more, or 60 mass% or more, with respect to the total amount of the constituent monomers.

By setting to this range the content of the low-Tg (meth)acrylic acid alkyl ester monomer that includes an alkyl moiety having 5 or more carbon atoms, the heat resistance and the electrolytic solution resistance of the adhesive agent composition can be increased in good balance.

The constituent monomers may include a low-Tg (meth)acrylic acid alkyl ester monomer that includes an alkyl moiety having less than 5 atoms.

In the constituent monomers, the content of the low-Tg (meth)acrylic acid alkyl ester monomer that includes an alkyl moiety having less than 5 carbon atoms is preferably 15 mass% or less, 10 mass% or less, 5 mass% or less, 2 mass% or less, less than 1 mass%, or less than 0.1 mass%, with respect to the total amount of the constituent monomers.

By setting to this range the content of the low-Tg (meth)acrylic acid alkyl ester monomer that includes an alkyl moiety having less than 5 carbon atoms, the heat resistance and the electrolytic solution resistance of the adhesive agent composition can be increased in good balance.

### (Carboxyl group-containing monomer)

The carboxyl group-containing monomer contains a carboxyl group and a functional group (a functional group having an unsaturated carbon bond, for example, a vinyl group) for copolymerization with another constituent monomer. The carboxyl group-containing monomer typically contains each one of the carboxyl group and the functional group having an unsaturated carbon bond.

Examples of the carboxyl group-containing monomer include meth(acrylic) acid, carboxyethyl acrylate, carboxypentyl acrylate, itaconic acid, maleic acid, fumaric acid, crotonic acid, ω-carboxy-polycaprolactone (n≈2) monoacrylate, 2-acryloyloxyethyl-succinic acid, 2-acryloyloxyethyl hexahydrophthalic acid, and 2-acryloyloxyethyl-phthalic acid.

In the constituent monomers, the content of the carboxyl group-containing monomer is preferably 0.5 mass% or more, 1 mass% or more, 2 mass% or more, or 3 mass% or more, and preferably 15 mass% or less, 10 mass% or less, 8 mass% or less, or 7 mass% or less, with respect to the total amount of the constituent monomers.

By setting the content of the carboxyl group-containing monomer to this range, the probe tack, the heat resistance, the electrolytic solution resistance, and the like of the adhesive agent composition can be increased.

### (Other monomers)

The constituent monomers may include one or more selected from a high-Tg (meth)acrylic acid alkyl ester, an alicyclic group-containing (meth)acrylic acid ester having a Tg of -20°C or more, or a (meth)acrylamide derivative.

The high-Tg (meth)acrylic acid alkyl ester is a monomer having a Tg of 20°C or more, or 50°C or more. The upper limit value of the Tg is not particularly limited, but, for example, 200°C, 190°C, or 180°C.

The high-Tg (meth)acrylic acid alkyl ester and the alicyclic group-containing (meth)acrylic acid ester having a Tg of -20°C or more preferably respectively include an alkyl moiety and an alicyclic group each preferably having 5 or more, 6 or more, or 8 or more carbon atoms. The upper limit of the number of carbon atoms is not particularly limited, and is, for example, 30, 25, or 20. The alicyclic group may have a monocyclic structure or a polycyclic structure.

Examples of the high-Tg (meth)acrylic acid alkyl ester include isobomyl acrylate (IBOA, Tg: 97°C, number of carbon atoms in alkyl moiety: 10) and isobornyl methacrylate (IBOMA, Tg: 180°C, number of carbon atoms in alkyl moiety: 10).

Examples of the alicyclic group-containing (meth)acrylic acid ester having a Tg of -20°C or more include cyclohexyl acrylate (CHA, Tg: 15°C, number of carbon atoms in alicyclic group: 6), cyclohexyl methacrylate (CHMA, Tg: 66°C, number of carbon atoms in alicyclic group: 6), dicyclopentanyl acrylate (Tg: 120°C, number of carbon atoms in alicyclic group: 10), and dicyclopentanyl methacrylate (Tg: 175°C, number of carbon atoms in alicyclic group: 10).

The (meth)acrylamide derivative is a compound obtained by substituting a terminal hydrogen atom of (meth)acrylamide with another substituent.

Examples of the (meth)acrylamide derivative include acryloyl morpholine (ACMO, Tg: 145°C, acrylamide derivative), diethyl acrylamide (DEAA, Tg: 81°C, acrylamide derivative), dimethyl acrylamide (DMAA, Tg: 119°C, acrylamide derivative), isopropyl acrylamide (NIPAM, Tg: 134°C, acrylamide derivative), and dimethylaminopropyl acrylamide (DMAPAA, Tg: 134°C, acrylamide derivative).

The content of the high-Tg (meth)acrylic acid alkyl ester, the alicyclic group-containing (meth)acrylic acid ester having a Tg of -20°C or more, and the (meth)acrylamide derivative can be set to 1 mass% or more, 5 mass% or more, or 10 mass% or more, and to 30 mass% or less or 25 mass% or less, with respect to the total amount of the constituent monomers.

The constituent monomers may further include another monomer. In this case, the content of the other monomer is preferably 10 mass% or less, 5 mass% or less, or 1 mass% or less, with respect to the total amount of the constituent monomers.

### <Weight average molecular weight of base polymer>

The base polymer has a weight average molecular weight of preferably 100,000 or more, 200,000 or more, 300,000 or more, or 500,000 or more, and preferably 3,000,000 or less, 2,000,000 or less, 1,500,000 or less, or 1,000,000 or less.

The weight average molecular weight of the base polymer is polystyrene-converted molecular weight measured by gel permeation chromatography (GPC).

### <Tg of base polymer>

The base polymer has a Tg of preferably -10°C or less, -20°C or less, or -30°C or less, and preferably -80°C or more, -70°C or more, -60°C or more, or -50°C or more.

The Tg of the base polymer may be measured using a differential scanning calorimeter (DSC), or a theoretical value of the Tg may be calculated from the types and the ratio of the constituent monomers.

### «<Gel fraction of cross-linked polymer»>

The gel fraction of the cross-linked polymer can normally be set to 30 mass% or more, 40 mass% or more, 50 mass% or more, 60 mass% or more, 70 mass% or more, 80 mass% or more, 85 mass% or more, 90 mass% or more, or 95 mass% or more.

Here, when the adhesive agent composition and the adhesive tape are used for holding an electronic component (particularly, for holding winding of a capacitor element) and used by being subjected to a heat treatment (for example, a reflow process), the gel fraction is changed between before and after the heat treatment in some cases. Particularly, by the cross-linking agents including the epoxy-based cross-linking agent and the isocyanate-based cross-linking agent, the cross-linked polymer can have a relatively high gel fraction after a heat treatment (for example, a reflow process) while maintaining a state of a relatively low gel fraction before the heat treatment (reflow process). As described above, the preferable gel fraction of the cross-linked polymer is different in some cases depending on whether the adhesive agent composition according to the present embodiment, the adhesive tape, or the capacitor element has or has not undergone a heat treatment.

When the adhesive agent composition is subjected to a heat treatment, the cross-linked polymer has a gel fraction of preferably 50 mass% or more, 60 mass% or more, or 70 mass% or more, and preferably 95 mass% or less, 90 mass% or less, or 85 mass% or less.

In the adhesive agent composition where sufficient cross-linking has been completed by a heat treatment (for example, the adhesive agent composition attached to a substrate by a reflow process and contained in a capacitor element), the cross-linked polymer preferably has a gel fraction of 70 mass% or more, 80 mass% or more, 85 mass% or more, 90 mass% or more, or 95 mass%. The upper limit value of the gel fraction is not particularly limited, but can be set to 98 mass% or 99 mass%.

More specifically, in the cases in which the adhesive agent composition is subjected to a heat treatment, when the gel fraction of the cross-linked polymer in the adhesive agent composition is defined as Gf₁ and the gel fraction of the cross-linked polymer in the adhesive agent composition having been heated at 200°C for 1 hour is defined as Gf₂, it is preferred that Gf₁ be 50 mass% or more, 60 mass% or more, or 70 mass% or more, Gf₂ be 70 mass% or more, 80 mass% or more, 85 mass% or more, 90 mass% or more, or 95 mass% or more, and the ratio Gf₂/Gf₁ be more than 1.00, 1.05 or more, 1.10 or more, 1.15 or more, or 1.20 or more. By setting the gel fractions to these ranges, the adhesive agent composition can be formed particularly suitable for the adhesive tape for holding an electronic component, the adhesive tape being to be subjected to a heat treatment (for example, a reflow process).

By setting the gel fractions of the cross-linked polymer to these ranges, the heat resistance and the electrolytic solution resistance of the adhesive agent composition can be increased in good balance.

The gel fractions can be adjusted by the types of the monomers, the types of the cross-linking agents, the amounts of the cross-linking agents, the temperature and the time of the heat treatment, and the like.

### <<<Other components>>>

The adhesive agent composition can contain another component without impairing the effects of the present invention. Examples of the other component include known additives such as a filler (for example, calcium carbonate, talc, silica, and carbon black), a surfactant, an organic pigment, an inorganic pigment, a stabilizer, a silane coupling agent, spacer particles, a tackifier, and a plasticizer.

Further, in order to improve workability, a solvent or the like is added during the production of the adhesive agent composition in some cases. The solvent or the like that can be blended during the production may remain in the adhesive agent composition, but is preferably removed.

### ««<Adhesive tape»»>

An adhesive tape includes a base material and an adhesive agent layer disposed on at least one surface of the base material.

The width of the adhesive tape may be appropriately adjusted in consideration of the size or the like of an application target (for example, an electronic component).

The adhesive tape may be formed, for example, in an elongated shape, and provided, as necessary, as a tape wound around a core, or may be provided in a film shape to be cut into a tape shape.

The adhesive tape may be a double-sided tape including the adhesive agent layer on both surfaces of the base material.

### <<<<Adhesive agent layer>>>>

The adhesive agent layer is made from the adhesive agent composition described above.

The thickness of the adhesive agent layer is not particularly limited, but can be set to, for example, 2 to 100 µm, 5 to 50 µm, 10 to 40 µm, or 12 to 35 µm.

### ««Base material»»

The base material can appropriately be selected without impairing the effects of the present invention, but is preferably formed of at least one selected from the group consisting of polyethylene terephthalate (PET), polypropylene (PP), polyphenylene sulfide (PPS), polyimide (PI), polyetherimide (PEI), and a plant fiber.

When the adhesive tape is used for an aluminum electrolytic capacitor and the like, the base material is preferably made from polypropylene (PP) and/or polyphenylene sulfide (PPS) from the viewpoint of hydrolysis resistance.

The polyethylene terephthalate (PET), polypropylene (PP), polyphenylene sulfide (PPS), polyimide (PI), and polyetherimide (PEI) may be synthetic resin films or may be synthetic resin fibers.

When made from a synthetic resin fiber and a plant fiber, the base material may be formed by paper making.

When formed of a synthetic resin film, the base material is preferably a stretched film (for example, a uniaxially stretched film or a biaxially stretched film) from the viewpoint of improving the heat resistance.

The thickness of the base material is not particularly limited, but can be set to, for example, 5 to 100 µm or 9 to 50 µm.

The base material may have the surface thereof subjected to an appropriate surface treatment. Examples of the surface treatment include a corona treatment for improving adhesion with the adhesive agent layer, and a peel treatment performed on the surface, in non-contact with the adhesive agent layer, of the base material.

### <<<<Other layers>>>>

The adhesive tape may include another conventionally known layer. Examples of the other layer include a primer layer that increases adherence between the base material and the adhesive agent layer, and a separator layer disposed in contact with the adhesive agent layer and removed in use of the adhesive tape. The adhesive tape, however, is preferably a directly wound tape (non separator) in consideration of productivity and environmental burden.

### ««<Method for producing adhesive agent composition and adhesive tape»»>

The adhesive agent composition and the adhesive tape can be produced by a conventionally known method.

The adhesive agent composition can be produced by the following procedure.

First, a raw material composition is prepared that contains a base polymer and cross-linking agents and contains another additive and a solvent as necessary (raw material preparing step).

Next, the raw material composition is heated to remove the solvent and crosslink the base polymer, and an adhesive agent composition is thus obtained (cross-linking step).

The adhesive tape can be produced by the following procedure.

First, a raw material composition is prepared that contains a base polymer and cross-linking agents and contains another additive and a solvent as necessary (raw material preparing step).

Next, the raw material composition is applied onto a base material (application step).

Next, the raw material composition is heated to remove the solvent and crosslink the base polymer, and an adhesive tape is thus obtained (cross-linking step).

Further, cutting, winding, and the like are performed as necessary (processing step).

An adhesive tape may be produced by stacking on a base material an adhesive agent layer preliminarily formed in a film shape or the like.

The solvent that can be contained in the raw material composition is not particularly limited, and a conventionally known solvent is usable.

Here, as described above, a preferable process is that in the cross-linking step, a cross-linking reaction is stopped at such a temperature and time that an unreacted cross-linking agent remains in the adhesive agent composition, and the remaining unreacted cross-linking agent is reacted in a heat treatment after the adhesive tape is applied for holding an electronic component. In this case, the heating conditions in the cross-linking step can include, for example, heating at less than 80°C or heating at 30 to 60°C. The heating time can be set to, for example, 24 to 168 hours.

The cross-linking step may be performed under such a temperature condition that no unreacted cross-linking agent remains in the adhesive agent composition. In this case, the heating conditions in the cross-linking step can include, for example, heating at 80°C or more, 100°C or more, 120°C or more, 150°C or more, or 200°C or more, or heating at 200 to 280°C. The heating time can be set to, for example, 1 to 60 minutes.

In the cross-linking step, the removal of a solvent and the cross-linking may be performed simultaneously or separately.

### <<<<Uses>>>>

The adhesive agent composition and the adhesive tape according to the present embodiments can be used for various uses, but are preferably used for holding an electronic component (for fixing an electronic component or an electronic-component constituent material).

Since the adhesive agent composition and the adhesive tape according to the present embodiments have sufficient heat resistance and electrolytic solution resistance particularly even when being in contact with an electrolytic solution or after exposed to a high-heat environment, the adhesive agent composition and the adhesive tape are optimal for holding winding of a capacitor (particularly, for holding winding of an aluminum capacitor).

More specifically, the adhesive agent composition and the adhesive tape enables formation of a capacitor element (particularly, an aluminum electrolytic capacitor element) including: a wound body formed by winding a plurality of thin-film electrodes (an anode foil and a cathode foil), with a separator or electrolytic paper interposed therebetween as necessary; an adhesive tape that holds winding of the wound body (that is attached to an outer circumference of the wound body and thereby fixes the thin-film electrodes); and an electrolytic solution.

Here, after the capacitor element is installed on a substrate or the like, a heat treatment (a reflow process or a heat treatment for curing a conductive adhesive agent) is performed in some cases. In the heat treatment, the capacitor element is also exposed to a heating environment. A capacitor element according to the present embodiment may be either a capacitor element having not undergone such a heat treatment or a capacitor element having undergone such a heat treatment.

As described above, when such a heat treatment is performed, the preferable gel fraction of the adhesive agent composition is in some cases different between before and after the heat treatment. Specifically, when the gel fraction of the cross-linked polymer in the adhesive agent composition of a capacitor element before a heat treatment is defined as Gf₃ and the gel fraction of the cross-linked polymer in the adhesive agent composition after the heat treatment is defined as Gf₄, Gf₃ is preferably 50 mass% or more, 60 mass% or more, or 70 mass% or more, Gf₄ is preferably 70 mass% or more, 80 mass% or more, 85 mass% or more, 90 mass% or more, or 95 mass% or more, and the ratio Gf₄/Gf₃ is preferably more than 1.00, 1.05 or more, 1.10 or more, 1.15 or more, or 1.20 or more.

The heating temperature in such a heat treatment is different also according to, for example, a component (for example, solder) other than the capacitor element, but can be set to, for example, 80°C or more, 120°C or more, 150°C or more, or 200°C or more. In other words, the adhesive agent composition and the adhesive tape according to the present embodiments are suitable for use in an environment at 80°C or more, 120°C or more, 150°C or more, or 200°C or more.

The heating time in such a heat treatment can be set to, for example, 5 minutes or more, 10 minutes or more, 30 minutes or more, or 1 hour or more.

As other uses of the adhesive agent composition and the adhesive tape according to the present embodiments, the adhesive agent composition and the adhesive tape can be used for electrode insulation of Li-ion secondary batteries from the viewpoint of having excellent heat resistance and electrolytic solution resistance.

An electronic component other than the capacitor element can also be exposed to a high-heat environment due to reflow and to an electrolytic solution and the like oozed from the capacitor element. Therefore, the adhesive agent composition and the adhesive tape according to the present embodiments can also preferably be used for uses other than for holding winding of a capacitor element within the scope of uses for holding an electronic component (for fixing an electronic component or an electronic-component constituent material).

When the adhesive agent composition and the adhesive tape are used for holding winding of a capacitor element, terminal peeling due to repulsion of the base material more likely occurs according as the diameter of the capacitor element is small. Therefore, the smaller the diameter of the capacitor is, the higher the adhesive property is required. The adhesive agent composition and the adhesive tape according to the present embodiments have excellent adhesiveness and can therefore be used for a small-diameter capacitor element (for example, a 4-20-mm-diameter capacitor element).

### ««<Preferable aspects of present invention»»>

Hereinafter, preferable aspects of the present invention are specifically described.

### ««Aspect 1»»

The present aspect 1 is an adhesive agent composition containing a cross-linked polymer obtained through a reaction between a base polymer and cross-linking agents, wherein
the base polymer is a copolymer obtained through copolymerization of constituent monomers including low-Tg (meth)acrylic acid alkyl ester monomers having a Tg of 20°C or less, and a carboxyl group-containing monomer,
in the constituent monomers, a content of a low-Tg (meth)acrylic acid alkyl ester monomer that includes an alkyl moiety having 5 or more carbon atoms is 30 mass% or more with respect to a total amount of the constituent monomers,
in the constituent monomers, a content of a low-Tg (meth)acrylic acid alkyl ester monomer that includes an alkyl moiety having less than 5 carbon atoms is 10 mass% or less with respect to the total amount of the constituent monomers,
the cross-linking agents include an epoxy-based cross-linking agent and an isocyanate-based cross-linking agent, and
an amount M_{E} of the epoxy-based cross-linking agent is less than 0.10 parts by mass, with an amount of the base polymer set to 100 parts by mass.

The present aspect 1 is also an adhesive tape including a base material and an adhesive agent layer disposed on at least one surface of the base material, the adhesive agent layer containing the adhesive agent composition.

The adhesive tape may be used in an environment at 80°C or more.

The adhesive tape may be used for fixing an electronic component or an electronic-component constituent material.

The adhesive tape may be used for holding winding of a capacitor element.

The present aspect 1 provides an adhesive agent composition having excellent heat resistance and electrolytic solution resistance. An adhesive tape obtained using this adhesive agent composition can appropriately fix, for example, an electronic component including a capacitor element.

### ««Aspect 2»»

The present aspect 2 is
an adhesive tape including a base material and an adhesive agent layer disposed on at least one surface of the base material, wherein
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent,
an amount M_{E} of the epoxy-based cross-linking agent is more than 0.01 parts by mass and less than 0.10 parts by mass, with an amount the base polymer set to 100 parts by mass, and
an amount Mi of the isocyanate-based cross-linking agent is 0.10 parts by mass or more, with the amount of the base polymer set to 100 parts by mass.

The cross-linked polymer may have a gel fraction of 60 to 90%.

The base polymer may be a copolymer obtained through copolymerization of constituent monomers including low-Tg (meth)acrylic acid alkyl ester monomers having a Tg of 20°C or less, and a carboxyl group-containing monomer.

In the constituent monomers, a content of a low-Tg (meth)acrylic acid alkyl ester monomer that includes an alkyl moiety having 5 or more carbon atoms may be 30 mass% or more with respect to a total amount of the constituent monomers.

In the constituent monomers, a content of a low-Tg (meth)acrylic acid alkyl ester monomer that includes an alkyl moiety having less than 5 carbon atoms may be 10 mass% or less with respect to the total amount of the constituent monomers.

The adhesive tape may be used for fixing an electronic component or electronic-component constituent material to be subjected to a heat treatment at 80°C or more.

The present aspect 2 can provide an adhesive tape having sufficient heat resistance, electrolytic solution resistance, and heat shrinkage resistance. This adhesive tape can appropriately fix, for example, an electronic component including a capacitor element.

Here, the adhesive tape preferably excludes an adhesive tape that includes an adhesive agent layer stacked only 0.5 mm or more inside from edges on both sides of a base material.

The adhesive tape also preferably excludes an adhesive tape containing a tackifier resin in an amount of more than 10 parts by mass relative to 100 parts by mass of an acrylic polymer.

### ««Aspect 3»»

The present aspect 3 is
a capacitor element including: a wound body formed by winding a plurality of thin-film electrodes; an adhesive tape that holds winding of the wound body; and an electrolytic solution, wherein
the adhesive tape includes a base material and an adhesive agent layer disposed on at least one surface of the base material,
the adhesive agent layer contains an adhesive agent composition containing a cross-linked polymer obtained through a reaction between a base polymer and cross-linking agents, and
the cross-linking agents include an epoxy-based cross-linking agent and an isocyanate-based cross-linking agent.

The base polymer may be a copolymer obtained through copolymerization of constituent monomers including low-Tg (meth)acrylic acid alkyl ester monomers having a Tg of 20°C or less, and a carboxyl group-containing monomer.

In the constituent monomers, a content of a low-Tg (meth)acrylic acid alkyl ester monomer that includes an alkyl moiety having 5 or more carbon atoms may be 30 mass% or more with respect to a total amount of the constituent monomers.

In the constituent monomers, a content of a low-Tg (meth)acrylic acid alkyl ester monomer that includes an alkyl moiety having less than 5 carbon atoms may be 10 mass% or less with respect to the total amount of the constituent monomers.

The cross-linked polymer may have a gel fraction of 85% or more.

The capacitor element may be an aluminum electrolytic capacitor.

The capacitor element may be used for attachment to a substrate by a reflow process.

The base material may be polyphenylene sulfide.

The base polymer may have a weight average molecular weight of 500,000 or more and 1,500,000 or less.

The present aspect 3 can provide a capacitor element having the winding-holding property thereof increased.

### Examples

Hereinafter, the present invention is described in more detail, but is not limited by any of the description.

### <<<<Production of adhesive tape>>>>

An adhesive tape was produced on the basis of the following procedure.

As a base material, a biaxially stretched polyphenylene sulfide film [trade name "Torelina 3040" (thickness: 16 µm) manufactured by Toray Industries, Inc., double side corona treated] was used.

A primer was applied onto one surface of the base material and dried as necessary.

A long-chain alkyl-based peeling agent was applied onto the other surface and dried (application amount after drying: 5 mg/m²).

Next, a raw material composition containing a base polymer, cross-linking agents, and a solvent was applied onto the primer-applied surface of the base material and heated at 100°C for 3 minutes to remove the solvent, and an adhesive agent layer having a prescribed thickness and made from an adhesive agent composition was thus formed.

In cross-linking, heating was performed at 50°C for 72 hours, and cross-linking of the base polymer was completed.

Examples are adhesive tapes obtained by changing the adhesive agent composition used.

Tables show the types of constituent monomers of the base polymer, the types of the cross-linking agents, and the blending amounts thereof (part by mass of solid content).

In some adhesive tapes, the primer was not applied to the base material, but the raw material composition was directly applied to the base material and dried.

In the tables, TETRAD (registered trade name) X is an epoxy-based cross-linking agent manufactured by MITSUBISHI GAS CHEMICAL COMPANY, INC., NACEM (registered trade name) Al is a metal-based cross-linking agent manufactured by NIHON KAGAKU SANGYO CO., LTD., and Coronate (registered trade name) L is a polyisocyanate-based cross-linking agent manufactured by Tosoh Corporation.

The Tg shown in the tables is a conventionally known physical property, and can be measured, for example, by performing, for each homopolymer, diffraction scanning calorimetry (DSC). The number of carbon atoms shown in the tables are the number of side-chain carbon atoms.

### «<Gel fraction>»

An adhesive agent was dissolved in THF and left to stand still in a roomtemperature environment for 24 hours, and thereafter the gel content was separated using a 200-mesh metal mesh. The separated gel content was dried and the mass thereof was measured. The measured value was divided by the mass of the adhesive agent originally dissolved in THF, and the value obtained was defined as a gel fraction.

### «<Gel fraction after heating»>

The gel fraction after heating was evaluated in the same manner as the method for evaluating the gel fraction except that the adhesive agent was heated in a 200°C environment for 1 hour.

### <<<Weight average molecular weight>>>

The weight average molecular weight was evaluated using a GPC device (LC-20) manufactured by SHIMADZU CORPORATION, with the sample concentration set to 0.2 wt% (THF solution), the sample injection amount set to 100 µl, THF used as an eluent, the flow rate set to 1.0 ml/min, and using 2 columns TOSOH TSK-GMHXl and a refractive index (RI) detector. The molecular weight was obtained as a polystyrene-converted value.

### ««Evaluation»»

The adhesive tapes according to the examples and comparative examples were evaluated for probe tack, terminal peeling, and heat shrinkage rate. Tables 1-4 show the evaluation results, and Table 5 shows the evaluation criteria of the evaluations.

### «<Probe tack»>

A probe tack test was performed by a method in conformity with ASTM D2979, using NS probe tack tester (manufactured by NICHIBAN, CO., LTD.), under the conditions of a 5-mm-diameter cylindrical contactor (probe), a pressure of 100 gf/cm², a contact time of 1 second, and a peeling speed of 10 mm/sec.

### «<Evaluation 1 of terminal peeling»>

### «Evaluation method»

An evaluation sample was prepared by winding 50 mm of an adhesive tape (width: 5 mm) around a 2-mmϕ SUS rod in a 5°C atmosphere. The evaluation sample was immersed in γ-butyrolactone at 23°C for 12 hours, and the length of a peeled terminal of the adhesive tape was checked. The γ-butyrolactone is a solvent often used as an electrolytic solution.

### «<Evaluation 2 of terminal peeling»>

### «Evaluation method»

An evaluation sample was prepared by winding 50 mm of an adhesive tape (width: 5 mm) around a 2-mmϕ SUS rod in a 5°C atmosphere. The evaluation sample was immersed in γ-butyrolactone at 105°C for 12 hours, and the length of a peeled terminal of the adhesive tape was checked. The γ-butyrolactone is a solvent often used as an electrolytic solution.

### «<Evaluation of heat shrinkage rate»>

### «Evaluation method»

An evaluation sample was prepared by attaching 50 mm of an evaluation adhesive tape (width: 5mm) to the back side of an adhesive tape attached to an aluminum panel. The evaluation sample was heated in an oven at 260°C for 1 hour, and the shrinkage rate of the adhesive tape was calculated on the basis of the following equation. Shrinkage rate (%) = (1 - Length of tape after heating/Length of tape before heating) × 100

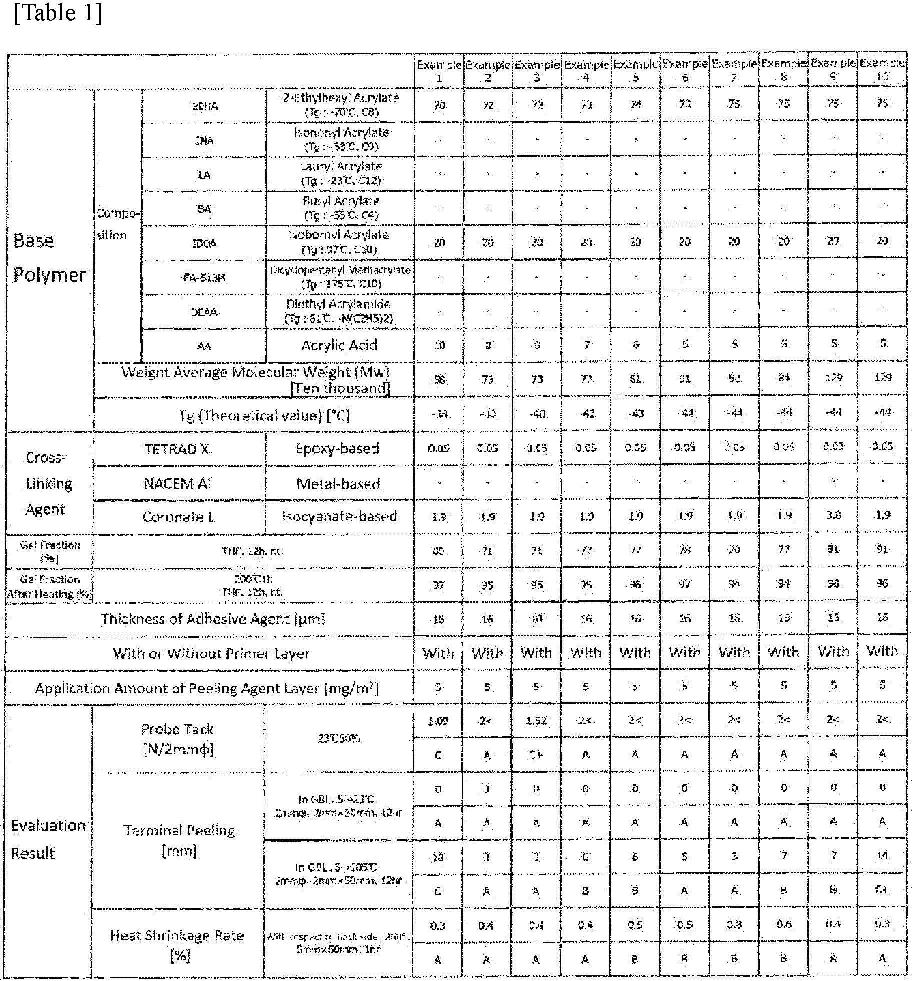

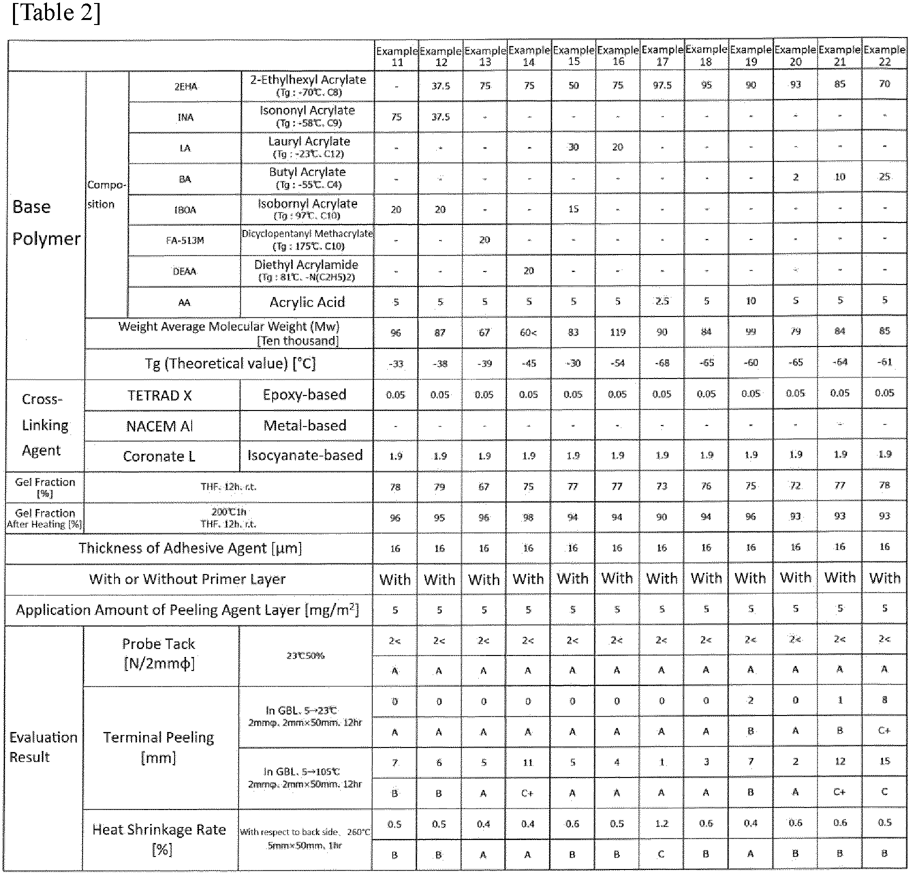

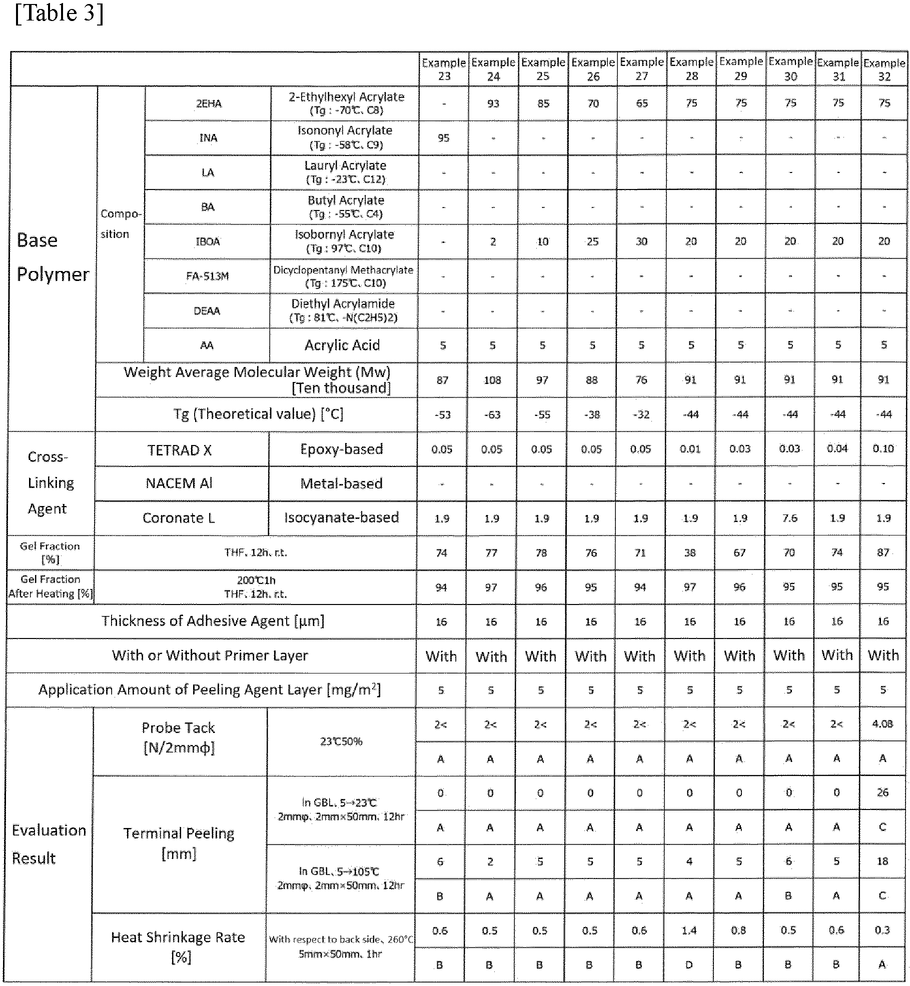

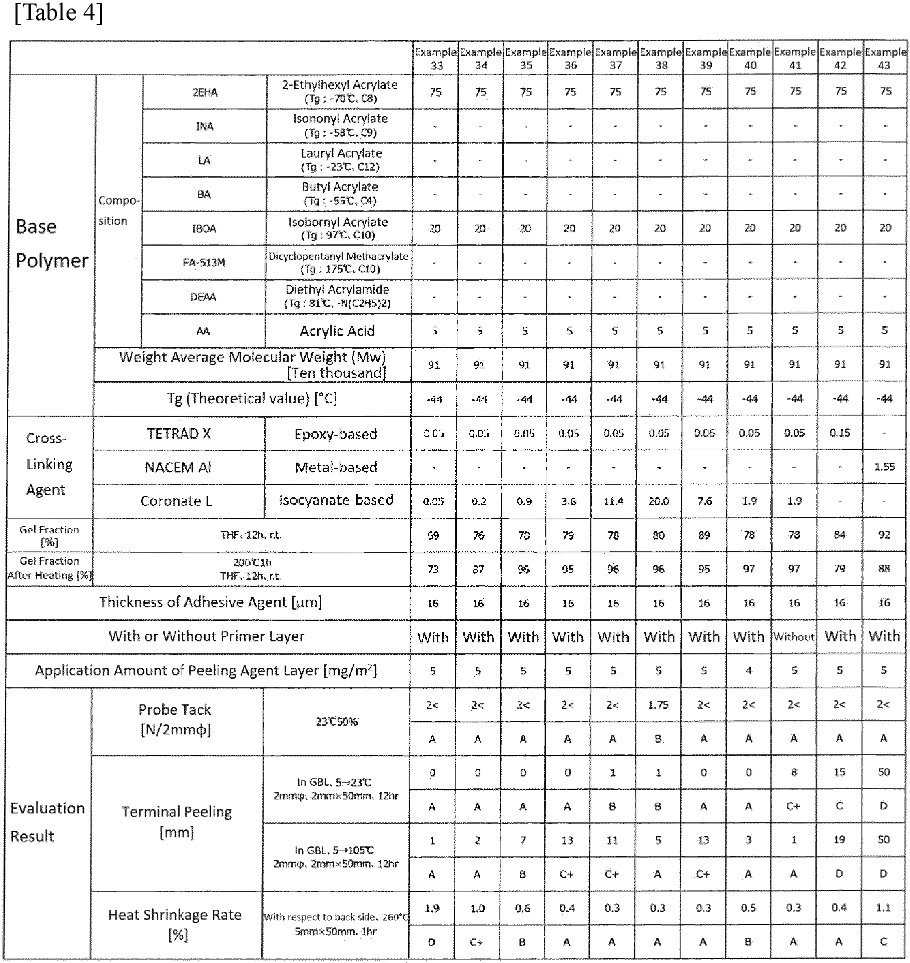

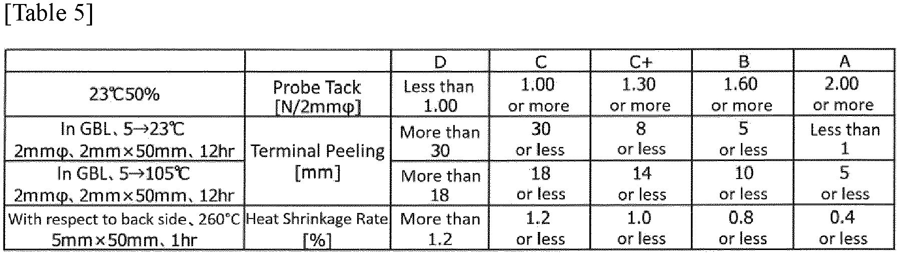

As is understood from the tables, the adhesive tapes of Examples 1-21, 23-31, and 33-41 made from the adhesive agent composition according to the aspect 1 are evaluated as C or higher in both the terminal peeling at 23°C and terminal peeling at 105°C, and as B or higher in at least one of the terminal peeling at 23°C and the terminal peeling at 105°C, and are thus understood to have excellent heat resistance and electrolytic solution resistance.

In addition, as is understood from the tables, none of the adhesive tapes of Examples 1-27, 29-32, and 34-41 according to the aspect 2 is evaluated as D, and therefore the adhesive tapes are understood to have excellent balance between heat resistance, electrolytic solution resistance, and heat shrinkage resistance.

Further, as is understood from the tables, none of Examples 1-41 is evaluated as D in the terminal peeling at 23°C and the terminal peeling at 105°C, and therefore the examples are understood to have excellent balance between heat resistance and electrolytic solution resistance. That is, the capacitor elements, according to the aspect 3, having these adhesive tapes applied thereto are understood to have a high winding-holding property (high reliability).

## Claims

1. An adhesive agent composition comprising a cross-linked polymer obtained through a reaction between a base polymer and cross-linking agents, wherein
the base polymer is a copolymer obtained through copolymerization of constituent monomers including low-Tg (meth)acrylic acid alkyl ester monomers having a Tg of 20°C or less, and a carboxyl group-containing monomer,
in the constituent monomers, a content of a low-Tg (meth)acrylic acid alkyl ester monomer that includes an alkyl moiety having 5 or more carbon atoms is 30 mass% or more with respect to a total amount of the constituent monomers,
in the constituent monomers, a content of a low-Tg (meth)acrylic acid alkyl ester monomer that includes an alkyl moiety having less than 5 carbon atoms is 10 mass% or less with respect to the total amount of the constituent monomers,
the cross-linking agents include an epoxy-based cross-linking agent and an isocyanate-based cross-linking agent, and
an amount M_{E} of the epoxy-based cross-linking agent is less than 0.10 parts by mass, with an amount of the base polymer set to 100 parts by mass.

2. An adhesive tape comprising a base material and an adhesive agent layer disposed on at least one surface of the base material, wherein
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent,
an amount M_{E} of the epoxy-based cross-linking agent is more than 0.01 parts by mass and less than 0.10 parts by mass, with an amount of the base polymer set to 100 parts by mass,
an amount Mi of the isocyanate-based cross-linking agent is 0.10 parts by mass or more, with the amount of the base polymer set to 100 parts by mass,
a ratio of M_{I} to M_{E} is more than 1 (M_{I}/M_{E} > 1),
the base polymer is a copolymer obtained through copolymerization of constituent monomers including low-Tg (meth)acrylic acid alkyl ester monomers having a Tg of 20°C or less, and a carboxyl group-containing monomer,
in the constituent monomers, a content of a low-Tg (meth)acrylic acid alkyl ester monomer that includes an alkyl moiety having 5 or more carbon atoms is 30 mass% or more with respect to a total amount of the constituent monomers,
in the constituent monomers, a content of a low-Tg (meth)acrylic acid alkyl ester monomer that includes an alkyl moiety having less than 5 carbon atoms is 10 mass% or less with respect to the total amount of the constituent monomers, and
the adhesive tape is used for fixing an electronic component or electronic-component constituent material to be subjected to a heat treatment at 80°C or more, with the proviso that the adhesive tape excludes an adhesive tape including an adhesive agent layer stacked only 0.5 mm or more inside from edges on both sides of a base material, and an adhesive tape containing a tackifier resin in an amount of more than 10 parts by mass relative to 100 parts by mass of an acrylic polymer.

3. An adhesive tape comprising a base material and an adhesive agent layer disposed on at least one surface of the base material, wherein
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent,
an amount M_{E} of the epoxy-based cross-linking agent is more than 0.01 parts by mass and less than 0.10 parts by mass, with an amount of the base polymer set to 100 parts by mass,
an amount Mi of the isocyanate-based cross-linking agent is 0.10 parts by mass or more, with the amount of the base polymer set to 100 parts by mass,
a ratio of M_{I} to M_{E} is more than 1 (M_{I}/M_{E} > 1),
the base polymer is a copolymer obtained through copolymerization of constituent monomers including low-Tg (meth)acrylic acid alkyl ester monomers having a Tg of 20°C or less, and a carboxyl group-containing monomer,
in the constituent monomers, a content of a low-Tg (meth)acrylic acid alkyl ester monomer that includes an alkyl moiety having 5 or more carbon atoms is 30 mass% or more with respect to a total amount of the constituent monomers,
in the constituent monomers, a content of a low-Tg (meth)acrylic acid alkyl ester monomer that includes an alkyl moiety having less than 5 carbon atoms is 10 mass% or less with respect to the total amount of the constituent monomers, and
the adhesive tape is used for holding winding of a capacitor element, with the proviso that the adhesive tape excludes an adhesive tape including an adhesive agent layer stacked only 0.5 mm or more inside from edges on both sides of a base material, and an adhesive tape containing a tackifier resin in an amount of more than 10 parts by mass relative to 100 parts by mass of an acrylic polymer.

4. The adhesive tape according to claim 2 or 3, wherein the cross-linked polymer has a gel fraction of 60 to 90%.

5. The adhesive tape according to any one of claims 2 to 4, wherein the base polymer has a weight average molecular weight of 500,000 or more and 1,500,000 or less.

6. A capacitor element comprising: a wound body formed by winding a plurality of thin-film electrodes; an adhesive tape that holds winding of the wound body; and an electrolytic solution, wherein
the adhesive tape includes a base material and an adhesive agent layer disposed on at least one surface of the base material,
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent, and
the capacitor element is used for attachment to a substrate by a reflow process.

7. A capacitor element comprising: a wound body formed by winding a plurality of thin-film electrodes; an adhesive tape that holds winding of the wound body; and an electrolytic solution, wherein
the adhesive tape includes a base material and an adhesive agent layer disposed on at least one surface of the base material,
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent, and
the base material is polyphenylene sulfide.

8. A capacitor element comprising: a wound body formed by winding a plurality of thin-film electrodes; an adhesive tape that holds winding of the wound body; and an electrolytic solution, wherein
the adhesive tape includes a base material and an adhesive agent layer disposed on at least one surface of the base material,
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent, and
the base polymer has a weight average molecular weight of 500,000 or more and 1,500,000 or less.

9. The capacitor element according to any one of claims 6 to 8, wherein
the base polymer is a copolymer obtained through copolymerization of constituent monomers including low-Tg (meth)acrylic acid alkyl ester monomers having a Tg of 20°C or less, and a carboxyl group-containing monomer,
in the constituent monomers, a content of a low-Tg (meth)acrylic acid alkyl ester monomer that includes an alkyl moiety having 5 or more carbon atoms is 30 mass% or more with respect to a total amount of the constituent monomers, and
in the constituent monomers, a content of a low-Tg (meth)acrylic acid alkyl ester monomer that includes an alkyl moiety having less than 5 carbon atoms is 10 mass% or less with respect to the total amount of the constituent monomers.

10. The capacitor element according to any one of claims 6 to 9, wherein the cross-linked polymer has a gel fraction of 85% or more.

11. The capacitor element according to any one of claims 6 to 10, being an aluminum electrolytic capacitor.

12. A method for heat-treating a capacitor element, the method comprising:
heat-treating a capacitor element including an electrolytic solution, a wound body formed by winding a plurality of thin-film electrodes, and an adhesive tape that holds winding of the wound body, after the capacitor element is attached to a substrate, wherein
the adhesive tape includes a base material and an adhesive agent layer disposed on at least one surface of the base material,
the adhesive agent layer contains an adhesive agent composition containing a cross-linked polymer obtained through a reaction between a base polymer and cross-linking agents,
the cross-linking agents include an epoxy-based cross-linking agent and an isocyanate-based cross-linking agent, and
when a gel fraction of the cross-linked polymer in the capacitor element before the heat treatment is defined as Gf₃, and a gel fraction of the cross-linked polymer after the heat treatment is defined as Gf₄,
the Gf₃ is 50 mass% or more,
the Gf₄ is 70 mass% or more, and
a ratio [Gf₄/Gf₃] is 1.05 or more.

13. The method according to claim 12, wherein a heating temperature in the heat treatment is 120°C or more.

14. The method according to claim 12 or 13, wherein the heat treatment is a reflow process.
